# EUROPEAN PATENT APPLICATION

(11) **EP 4 503 546 A1**
(43) Date of publication of application: **05.02.2025**
(21) Application number: 24191341.7
(22) Date of filing: 29.07.2024
(51) Int. Cl.: H04L 41/5019, H04L 41/342, H04L 41/042, H04L 9/40, H04L 67/10, H04W 12/60, H04W 24/02, H04L 41/16

(54) **METHODS AND ENTITIES FOR A NETWORK**

(30) Priority: 31.07.2023 FI 20235853
(71) Applicant: Nokia Solutions and Networks Oy, 02610 Espoo (FI)
(72) Inventor: SUBRAMANYA, Tejas, Munich (DE); GAJIC, Borislava, Unterhaching (DE); JAGADEESAN, Lalita, Naperville - Illinois (US); LIU, Shushu, Espoo (FI); MONSHIZADEH, Mehrnoosh, Saint Germain les Arpajon (FR); MALANCHINI, Ilaria, Ludwigsburg (DE)
(74) Representative: Nokia EPO representatives

(57) **Abstract**

A first apparatus and a second apparatus (128) that are configured to manage or orchestrate network resources, or network services, or a machine learning model, or a composition of a machine learning model for a first stakeholder and a second stakeholder respectively, and first method comprising receiving, at the first apparatus (120), a requirement regarding a network intent, or for a network resource, or a network service, or a machine learning model, or a composition of a machine learning model, determining, at the first apparatus (120), a message regarding the requirement, sending the message to the second apparatus (128), and a second method comprising receiving, from the first apparatus (120) a first message regarding a requirement, and sending a second message regarding the requirement, to the first apparatus (120) or a first message regarding a network intent, and sending a second message regarding the network intent to the first apparatus (120).

## Description

### Field of the invention

The disclosure herein relates to methods and entities for a network.

### Background

In the current mobile network ecosystem there are numerous stakeholders, e.g., network operators, that offer the mobile network services.

### Summary

The disclosure herein relates to a multi-stakeholder concept for a network ecosystem in which numerous stakeholders, e.g., network operators, offer network resources or network services, or machine learning models, or compositions of machine learning models.

A first method comprises receiving, at a first apparatus that is configured to manage or orchestrate network resources of a first stakeholder, a requirement, determining, at the first apparatus, at least a part of the requirement that needs to be orchestrated with a second apparatus that is configured to manage or orchestrate network resources for a second stakeholder, and sending a request regarding at least a part of the requirement that needs to be orchestrated with the second apparatus to the second apparatus.

According to some examples of the first method, the requirement comprises a network intent, a network resource, a network service, a machine learning model, a composition of a machine learning model, or an information about a trust relationship between the first stakeholder and the second stakeholder.

According to some examples of the first method, the requirement comprises a machine learning model performance, or a machine learning model configuration.

According to some examples the first method comprises determining, sending, receiving, or requesting a report regarding a network resource, a service requirement, a machine learning model performance, or a machine learning model configuration.

A second method comprises receiving, from a first apparatus that is configured to manage or orchestrate network resources of a first stakeholder, at a second apparatus that is configured to manage or orchestrate network resources of a second stakeholder, a request regarding at least a part of a requirement that needs to be orchestrated with the second apparatus, determining at the second apparatus at least a part of the requirement that can be orchestrated with the second apparatus, and sending the response regarding the requirement, to the first apparatus.

According to some examples of the second method, the request comprises a network intent, a network resource, a network service, a machine learning model, a composition of a machine learning model, or an information about a trust relationship between the first stakeholder and the second stakeholder.

According to some examples of the second method, the requirement comprises a machine learning model performance or a machine learning model configuration.

According to some examples, the second method comprises receiving a request for a report regarding a network resource, a service requirement, a machine learning model performance, or a machine learning model configuration from the first apparatus, determining the report, and sending the report to the first apparatus.

According to some examples, the second the method comprises sending a request regarding at least a part of the requirement that needs to be orchestrated to an apparatus of the second stakeholder, receiving a response regarding at least a part of the requirement that needs to be orchestrated from the apparatus of the second stakeholder, and determining the response to the first apparatus depending on the response from the apparatus.

A first apparatus according to some examples comprises means for managing network resources of a first stakeholder, receiving a requirement, determining at least a part of the requirement that needs to be orchestrated with a second apparatus that is configured to manage or orchestrate network resources for a second stakeholder, and sending a request regarding at least a part of the requirement that needs to be orchestrated with the second apparatus to the second apparatus.

According to some examples of the first apparatus, the requirement comprises a network intent, a network resource, a network service, a machine learning model, a composition of a machine learning model, or an information about a trust relationship between the first stakeholder and the second stakeholder.

According to some examples of the first apparatus, the requirement comprises a machine learning model performance or a machine learning model configuration.

According to some examples, the first apparatus comprises means for determining, sending, receiving, or requesting a report regarding a network resource, a service requirement, a machine learning model performance, or a machine learning model configuration.

A second apparatus according to some examples comprises means for managing network resources of a second stakeholder, receiving a request regarding at least a part of a requirement that needs to be orchestrated with the second apparatus from a first apparatus that is configured to manage or orchestrate network resources of a first stakeholder, determining at the second apparatus at least a part of the requirement that can be orchestrated with the second apparatus, and sending the response regarding the requirement, to the first apparatus.

According to some examples of the second apparatus, the request comprises a network intent, a network resource, a network service, a machine learning model, a composition of a machine learning model, or an information about a trust relationship between the first stakeholder and the second stakeholder.

According to some examples of the second apparatus, the requirement comprises a machine learning model performance or a machine learning model.

According to some examples, the second apparatus comprises means for receiving a request for a report regarding a network resource, a service requirement, a machine learning model performance, or a machine learning model configuration from the first apparatus, and determining the report, and sending the report to the first apparatus.

According to some examples, the second apparatus comprises means for sending a request regarding at least a part of the requirement that needs to be orchestrated to an apparatus of the second stakeholder, receiving a response regarding at least a part of the requirement that needs to be orchestrated from the apparatus of the second stakeholder, and determining the response to the first apparatus depending on the response from the apparatus.

According to some examples, the means for managing network resources, determining, sending, receiving, or requesting comprise a processor a non-transitory memory.

According to some examples, a means for sending or requesting comprise a sender. According to some examples, a means for receiving comprise a receiver.

Further exemplary embodiments are derived from the following description and the drawing.

### Brief description of the figures

Fig. 1 schematically depicts a cross-operator peer-to-peer management and orchestration framework,
Fig. 2 depicts a first part of an exemplary sequence flow diagram for a cross-stakeholder feasibility check,
Fig. 3 depicts a second part of the exemplary sequence flow diagram for a cross-stakeholder feasibility check,
Fig. 4 depicts a third part of the exemplary sequence flow diagram for a cross-stakeholder feasibility check,
Fig. 5 depicts a fourth part of the exemplary sequence flow diagram for a cross-stakeholder feasibility check,
Fig. 6 depicts a graph of stakeholders,
Fig. 7 depicts a sequence flow diagram for a cross-stakeholder configuration of machine learning models,
Fig. 8 depicts a sequence flow diagram for reporting,
Fig. 9 schematically depicts scenarios of cross-stakeholder machine learning composition.

### Description of the embodiments

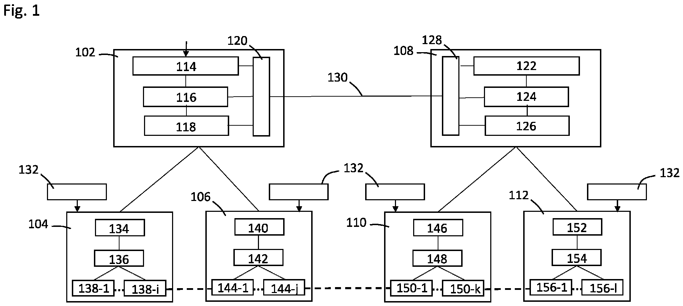

Figure 1 schematically depicts a cross-stakeholder peer-to-peer management and orchestration framework.

The framework comprises a first entity 102 that is configured to manage or orchestrate network resources, or network services, or a machine learning model, or a composition of a machine learning model for a first stakeholder.

The first entity 102 is configured in the example to manage or orchestrate a first domain of the first stakeholder 104 and a second domain of the first stakeholder 106.

The framework comprises a second entity 108 that is configured to manage or orchestrate network resources, or network services, or a machine learning model, or a composition of a machine learning model for a second stakeholder.

The second entity 108 is configured in the example to manage or orchestrate a first domain of the second stakeholder 110 and a second domain of the second stakeholder 112.

The first entity 102 comprises a cross-stakeholder intent manager 114, a cross-stakeholder management and orchestrator 116 and a cross-stakeholder machine learning orchestrator 118 and a peer-to-peer orchestrator 120. The peer-to-peer orchestrator 120 of the first entity 102 is an example for a first apparatus that is configured to manage or orchestrate network resources, or network services, or the machine learning model, or the composition of the machine learning model for the first stakeholder.

The second entity 102 comprises a cross-stakeholder intent manager 122, a cross-stakeholder management and orchestrator 124 and a cross-stakeholder machine learning orchestrator 126 and a peer-to-peer orchestrator 128. The peer-to-peer orchestrator 128 of the second entity 108 is an example for a second apparatus that is configured to manage or orchestrate network resources, or network services, or the machine learning model, or the composition of the machine learning model for the second stakeholder.

The cross-stakeholder intent manager 114, the cross-stakeholder management and orchestrator 116, and the cross-stakeholder machine learning orchestrator 118 of the first entity 102 are examples for a third apparatus that is associated with the first stakeholder. The cross-stakeholder intent manager 122, the cross-stakeholder management and orchestrator 124 and the cross-stakeholder machine learning orchestrator 126 of the second entity 108 are examples for a third apparatus that is associated with the second stakeholder.

According to some examples, the first apparatus comprises a receiver, that is configured to receive a message.

According to some examples, the first apparatus comprises a processor that is configured to determine a message. According to some examples, the first apparatus comprises a sender that is configured to send the received or determined message.

According to some examples, the second apparatus comprises a receiver, that is configured to receive a message.

According to some examples, the second apparatus comprises a processor that is configured to determine a message. According to some examples, the second apparatus comprises a sender that is configured to send the received or determined message.

According to some examples, the third apparatus comprises a receiver, that is configured to receive a message.

According to some examples, the third apparatus comprises a processor that is configured to determine a message. According to some examples, the third apparatus comprises a sender that is configured to send the received or determined message.

The cross-stakeholder intent manager 114 of the first entity 102 and the cross-stakeholder intent manager 122 of the second entity 108 are configured to communicate via the peer-to-peer orchestrator 120 of the first entity 102 and the peer-to-peer orchestrator 128 of the second entity 108.

The cross-stakeholder management and orchestrator 116 of the first entity 102 and the cross-stakeholder management and orchestrator 124 of the second entity 108 are configured to communicate via the peer-to-peer orchestrator 120 of the first entity 102 and the peer-to-peer orchestrator 128 of the second entity 108.

The cross-stakeholder machine learning orchestrator 118 of the first entity 102 and the cross-stakeholder machine learning orchestrator 126 of the second entity 108 are configured to communicate via the peer-to-peer orchestrator 120 of the first entity 102 and the peer-to-peer orchestrator 128 of the second entity 108.

The peer-to-peer orchestrator 120 of the first entity 102 and the peer-to-peer orchestrator 128 of the second entity 108 are configured to connect via a peer-to-peer interface 130.

The first domain of the first stakeholder 104 and the second domain of the first stakeholder 106 and the first domain of the second stakeholder 110 and the second domain of the second stakeholder 112 may comprise an intent based network that is managed by a respective intent manager 132.

The first domain of the first stakeholder 104 may comprise a radio access network management and orchestrator 134 that is configured to manage and orchestrate the radio access network in the first domain of the first stakeholder 104. The first domain of the first stakeholder 104 may comprise a machine learning orchestrator 136 that is configured to orchestrate i machine learning models 138-1, ..., 138-i in the first domain of the first stakeholder 104.

The second domain of the first stakeholder 104 may comprise a core network management and orchestrator 140 that is configured to manage and orchestrate the core network in the second domain of the first stakeholder 104. The second domain of the first stakeholder 104 may comprise a machine learning orchestrator 142 that is configured to orchestrate j machine learning models 144-1, ..., 144-j in the second domain of the first stakeholder 104.

The first domain of the second stakeholder 110 may comprise a radio access network management and orchestrator 146 that is configured to manage and orchestrate the radio access network in the first domain of the second stakeholder 110. The first domain of the second stakeholder 110 may comprise a radio access network machine learning orchestrator 148 that is configured to orchestrate k machine learning models 150-1, ..., 150-k in the first domain.

The second domain of the second stakeholder 112 may comprise a core network management and orchestrator 152 that is configured to manage and orchestrate the core network in the second domain of the second stakeholder 112. The second domain of the second stakeholder 112 may comprise a core machine learning orchestrator 154 that is configured to orchestrate 1 machine learning models 156-1, ..., 156-l in the second domain of the second stakeholder 112.

The number i, j, k, l of the machine learning models may be the same or different numbers of machine learning models may be provided. The machine learning models may be configured to interoperate.

The stakeholders may provide more of less domains.

The cross-stakeholder peer-to-peer management and orchestration framework is used to ensure the fulfilment of desired cross-stakeholder machine learning performance or configuration requirements, in addition to the cross-stakeholder network and service performance requirements, as indicated in the network intent.

The peer-to-peer orchestrators may provide a respective management function in the stakeholders and the peer-to-peer interface 130 between the respective management functions.

According to one aspect, a trust model is provided for peer-to-peer cross-stakeholder orchestration.

The trust model comprises a notion of full trust as a direct trust relationship between two stakeholders who have a bilateral service level agreement. The trust model comprises a notion of partial trust as an indirect relationship between two stakeholders when there exists a chain of intermediary stakeholders who have full trust.

According to one aspect, a measure of trust is provided. The measure of trust is referred to as attenuation of trust. The attenuation expresses the minimum number of intermediary stakeholders that are needed to achieve partial trust among two stakeholders. This means, the higher the level of attenuation, the weaker the level of trust.

According to one aspect, trust tables are provided that correspond to the trust model. The trust tables are determined via a peer-to-peer algorithms, e.g., distributed or decentralized algorithms.

According to one aspect, the trust tables are provided for use in cross-stakeholder orchestration and negotiation. The cross-stakeholder orchestration and negotiation may comprise a 1:1 or one 1:N orchestration and negotiation between network resources, network services or machine learning models.

The peer-to-peer orchestrators may support the following cross-stakeholder network resource and service related operations:
- Receive network resource and service requirements from the cross-stakeholder management and orchestrator.
- Indicate needed network resource and service requirements to the peer-to-peer orchestrator of another stakeholder.
- Send network resource and service requirements received by the peer-to-peer orchestrator to the cross-stakeholder management and orchestrator.
- Receive achievable network resource and service requirements from the cross-stakeholder management and orchestrator.
- Indicate achievable network resource and service requirements to the peer-to-peer orchestrator of another stakeholder.
- Send achievable network resource and service requirements received by the peer-to-peer orchestrator to the cross-stakeholder management and orchestrator.

The peer-to-peer orchestrators may support the following cross-stakeholder machine-learning related operations:
- Receive machine learning requirements, e.g., a performance and configuration, from the cross-stakeholder machine learning orchestrator.
- Indicate needed machine learning requirements, e.g., a performance and configuration, to the peer-to-peer orchestrator of another operator.
- Send machine learning requirements, e.g., a performance and configuration, received by the peer-to-peer orchestrator to the cross-stakeholder machine learning orchestrator.
- Receive achievable machine learning requirements, e.g., a performance and configuration, from the cross-stakeholder machine learning orchestrator.
- Indicate the achievable machine learning requirements, e.g., a performance and configuration, to the peer-to-peer orchestrator of another operator.
- Send achievable machine learning requirements, e.g., a performance and configuration, requirements received by the peer-to-peer orchestrator to the cross-stakeholder machine learning orchestrator.

The peer-to-peer orchestrators may support the following cross-stakeholder machine learning composition related operations:
- Receive machine learning composition requirements, e.g., performance and configuration, from the cross-stakeholder machine learning orchestrator.
- Indicate needed machine learning composition requirements, e.g., performance and configuration, to the peer-to-peer orchestrator of another operator.
- Send machine learning composition requirements, e.g., performance and configuration, received by the peer-to-peer orchestrator to the cross-stakeholder machine learning orchestrator.

- Receive achievable machine learning composition requirements, e.g., performance and configuration, from the cross-stakeholder machine learning orchestrator.
- Indicate achievable machine learning composition requirements, e.g., performance and configuration, requirements to the peer-to-peer orchestrator of the other operator.
- Send achievable machine learning composition requirements, e.g., performance and configuration, received by the peer-to-peer orchestrator to the cross-stakeholder machine learning orchestrator.

The peer-to-peer orchestrators may support the following cross-stakeholder reporting related operations:
- Receive network resource, network service and machine learning related report requests or subscriptions from the cross-stakeholder machine learning orchestrator.
- Indicate needed network resource, network service and machine learning related report requests or subscriptions to the peer-to-peer orchestrator of the other operator.
- Send network resource, network service and machine learning related report requests or subscriptions received by the peer-to-peer orchestrator to the cross-stakeholder machine learning orchestrator.
- Receive network resource, network service and machine learning related reports from the cross-stakeholder machine learning orchestrator.
- Indicate received network resource, network service and machine learning related reports to the peer-to-peer orchestrator of another operator.
- Send network resource, network service and machine learning related reports received by the peer-to-peer orchestrator to the cross-stakeholder machine learning orchestrator.

The peer-to-peer orchestrators may support the following cross-stakeholder security and trust related operations:
- Receive requests for information about trust relationships, e.g., full trust, partial trust, or a measure of trust, with other stakeholders. Such request may be a request to or a request from the peer-to-peer orchestrator of the stakeholder, to support translation of cross-stakeholder network and service requirements and cross-stakeholder machine learning and machine learning composition requirements.
- Send information about trust relationships, e.g., full trust, partial trust, or a measure of trust, with other stakeholders. Such request may be a request to or a request from another peer-to-peer orchestrator of another stakeholder. Such request may be sent after applying relevant stakeholder-specific policies.

In the following, sequence flow diagrams for methods are described that focus on peer-to-peer interactions between two stakeholders. In case of more than two stakeholders, the sequence of steps applies to peer-to-peer interactions between the more than two stakeholders.

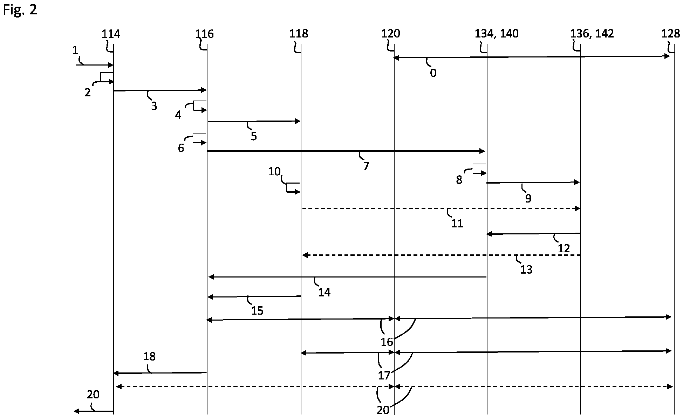

Figure 2 depicts a first part of an exemplary sequence flow diagram for a cross-stakeholder feasibility check.

The steps in the exemplary first part of the sequence are as follows:

### Step 0:

Establish trust between the stakeholders.

In the example the peer-to-peer orchestrator 120 of the first stakeholder and the peer-to-peer orchestrator 128 of the stakeholder determine a respective trust table that represents its full and partial trust relationships with other stakeholders, as well as the level of this trust as embodied in the attenuation of trust measure.

### Step 1:

The cross-stakeholder intent manager 114 of the first entity 102 receives the network intent, e.g., performance intent, from a customer.

### Step 2:

The cross-stakeholder intent manager 114 of the first entity 102 translates the network intent into end-to-end network resource and service requirements.

For example, the attributes and their values in the following table 1 may describe the translated end-to-end network resource and service requirements:

| **Attribute Name** | **Attribute Value** |
|---|---|
| serviceProfileld | E2Eservice |
| pLMNInfoList | pLMN1 |
| maxNumberofUEs | 1000 |
| coverageArea | Area1 |
| dLLatency | 5ms |
| uLLatency | 5ms |
| uEMobilityLevel | high |
| availability | 99.99 |
| dLThpt | 100 Mbps |
| uLThpt | 10 Mbps |
| maxN umberofPDUSessions | 10000 |
| averagePRBsratio [optional] | 0.2 |
| offeredPerUserPrice | 10 |
| offeredPerPRBPrice [optional] | 0 |
| performanceTolerance | 0.02 |
| compensationForNonFullfillment | Yes |
| computationalResources | Yes |
| requestMemory | 256 MB |
| requestCores | 16 |
| MLInvolvement | Yes |

In table 1, a service profile ID is specified. Subsequently, the number of users, coverage area and network requirements are given. The resources can optionally be requested also in terms of PRBs (physical resource blocks). The requesting operator is then proposing a price per user, or per PRB. Performance tolerance is the maximum allowed deviation from the requested performance, i.e., the throughput cannot (on average or instantaneously) be less than 2% the agreed one. In case of non fulfilment, the parties need to agree on whether there is a compensation for the non-received services. Computational resources can also be negotiated. In this case, memory and cores need to be specified. In case of need for ML support, the ML involvement flag needs to be properly activated.

### Step 3:

The cross-stakeholder management and orchestrator 116 of the first entity 102 receives the end-to-end resource and service requirements from the cross-stakeholder intent manager 114 of the first entity 102.

### Step 4:

The cross-stakeholder management and orchestrator 116 of the first entity 102 translates the end-to-end resource and service requirements into end-to-end machine learning requirements. According to an example, the end-to-end machine learning requirements are determined if machine learning models are to be instantiated, e.g., to manage or optimize the instantiated end-to-end network service.

For example, the attributes and their values in the following table 2a may describe the end-to-end network service requirements translated into end-to-end machine learning requirements, e.g., performance or configuration requirements:

| **Attribute Name** | **Attribute Value** |
|---|---|
| ML model ID | The ID of the ML model |
| Version ID | The information about the version of the ML model |
| inferenceType | The identifier of the problem /use case the ML model is solving |
| Decision making capability | Expressed in the form <object,attribute,metric> |
| >object | the object or object types for which the ML model can undertake optimization or control |
| >attribute | the configurable attributes on object or object types specified, which the ML model optimizes or controls to achieve the desired outcomes |
| >metric | the performance metrics which the ML model optimizes through its actions |
| Analytics capability | Expressed in the form <object,context> |
| >object | the object or object types for which the ML model can undertake analysis |
| >context | the network context (on the specified object) for which the ML model produces analysis |
| performanceMetric [TS 28.105] | It indicates the performance metric used to evaluate the performance of an ML model, e.g. "accuracy", "precision", "F1 score", etc. |
| performanceScore[TS 28.105] | It indicates the performance score (in unit of percentage) of an ML entity when performing inference on a specific data set. |
| | The performance metrics may be different for different kinds of ML models depending on the nature of the model. For instance, for numeric prediction, the metric may be accuracy; for classification, the metric may be a combination of precision and recall, like the "F1 score". |

In addition, if a composition among different machine learning models is required for fulfillment of end-to-end network service, e.g., due to needed flexibility and reusability requirements, an according machine learning composition requirement may be derived. For example, the attributes and their values in the following table 2b may describe the translated end-to-end machine learning composition requirements:

| **Attribute Name** | **Attribute Value** |
|---|---|
| ML model composition ID | The ID of the ML model composition |
| ML model composition version ID | The information about the version of the ML model composition |
| inferenceType | The identifier of the problem /use case the ML model composition is solving |
| Composed ML models | The list of ML models that are composed together for realization of the use case identified by inferenceType |
| Structure | The description of the ML composition structure in terms of number of levels and parallels. |
| >Levels | An integer range (1, n) that indicate the ML composition has n levels, where an integer in the range indicates a specific level, starting from 1. Each level would consist of an ML model. The output data of one level are used as the input data of the next level or as the output data of the ML composition when last level. |
| >>Parallels | An integer range (1, m) that indicate the series of the parallel ML models, inside a given level, starting from 1. |
| >>>Input parameters | Description of the parameters that are expected as input to each ML model in the composition |
| >>>Output parameters | Description of the parameters that are expected as output of each ML model in the composition |

Additionally, the cross-stakeholder management and orchestrator 116 of the first entity 102 may translate the end-to-end resource and service requirements into domain-specific resource and service requirements. Domain-specific in this context may be radio access network specific or core specific.

### Step 5:

The cross-stakeholder machine learning orchestrator 118 of the first entity 102 receives the end-to-end machine learning requirements from the cross-stakeholder manager and orchestrator 116 of the first entity 102.

### Step 6:

The cross-stakeholder manager and orchestrator 116 translates the end-to-end machine learning requirements into radio access network or core network resource and service requirements.

### Step 7:

The radio network management and orchestrator 134 of the first domain of the first stakeholder 104 receives the radio access network resource and service requirements from the cross-stakeholder manager and orchestrator 116 of the first entity 102. The core network management and orchestrator 140 of the second domain of the first stakeholder 106 receives the core network resource and service requirements from the cross-stakeholder manager and orchestrator 116 of the first entity 102.

### Step 8:

The radio network management and orchestrator 134 of the first domain of the first stakeholder 104 translates the radio access network resource and service requirements into radio access network machine learning requirements.

The core network management and orchestrator 140 of the second domain of the first stakeholder 106 translates the core network resource and service requirements into core machine learning requirements.

### Step 9:

The radio access network machine learning orchestrator 136 receives the radio access network machine learning requirements from the radio access network management and orchestrator 134 of the first domain of the first stakeholder 104.

The core network machine learning orchestrator 142 receives the core machine learning requirements from the core network management and orchestrator 140 of the second domain of the first stakeholder 106.

### Step 10:

The cross-stakeholder machine learning orchestrator 118 of the first entity 102 translates the end-to-end machine learning requirements into radio access network machine learning and core machine learning requirements.

### Step 11:

The radio access network machine learning orchestrator 136 of the first domain of the first stakeholder 104 receives the radio access network machine learning requirements from the cross-stakeholder machine learning orchestrator 118 of the first entity 102.

The core network machine learning orchestrator 142 of the second domain of the first stakeholder 106 receives the radio access network machine learning requirements from the cross-stakeholder machine learning orchestrator 118 of the first entity 102.

### Step 12:

The cross-stakeholder machine learning orchestrator 118 of the first entity 102 receives an acknowledgement or not acknowledgement regarding the availability, i.e., the feasibility, of the radio access network machine learning requirements from the radio access network machine learning orchestrator 136 of the first domain of the first stakeholder 104.

The cross-stakeholder machine learning orchestrator 118 of the first entity 102 receives an acknowledgement or not acknowledgement regarding the availability, i.e., the feasibility, of the core network machine learning requirements from the core network machine learning orchestrator 142 of the second domain of the first stakeholder 106.

### Step 13:

The cross-stakeholder machine learning orchestrator 118 of the first entity 102 receives an acknowledgement or not acknowledgement regarding the availability, i.e., the feasibility, of the radio access network machine learning requirements from the radio access network machine learning orchestrator 136 of the first domain of the first stakeholder 104.

The cross-stakeholder machine learning orchestrator 118 of the first entity 102 receives an acknowledgement or not acknowledgement regarding the availability, i.e., the feasibility, of the core network machine learning requirements from the core network machine learning orchestrator 142 of the second domain of the first stakeholder 106.

### Step 14:

The cross-stakeholder manager and orchestrator 116 of the first entity 102 receives an acknowledgement or not acknowledgement regarding the availability, i.e., the feasibility, of the radio access network resource and service requirements from the radio network management and orchestrator 134 of the first domain of the first stakeholder 104.

The cross-stakeholder manager and orchestrator 116 of the first entity 102 receives an acknowledgement or not acknowledgement regarding the availability, i.e., the feasibility, of the core network resource and service requirements from the core management and orchestrator 140 of the second domain of the first stakeholder 106.

### Step 15:

The cross-stakeholder manager and orchestrator 116 of the first entity 102 receives an acknowledgement or not acknowledgement regarding the availability, i.e., the feasibility, of the end-to-end machine learning requirements from the cross-stakeholder machine learning orchestrator 118 of the first entity 102.

The cross-stakeholder machine learning orchestrator 118 of the first entity 102 may receive a feasibility check report from the radio access network machine learning orchestrator 136 of the first domain of the first stakeholder 104 and/or from the core access network machine learning orchestrator 142 of the second domain of the first stakeholder 106. The cross-stakeholder machine learning orchestrator 118 of the first entity 102 may analyze whether the end-to-end machine learning requirements can be satisfied or not and correspondingly send the acknowledgement or not acknowledgement to the requested end-to-end machine learning requirements. For example, the analysis may conclude that the first stakeholder may be able to support one part of end-to-end machine learning requirements and may need to rely on other stakeholders to support other part of end-to-end machine learning requirements.

Table 2a and table 2b provide an example for the requirements.

In the example, the cross-stakeholder machine learning orchestrator 118 of the first entity 102 and the cross-stakeholder machine learning orchestrator 126 of the second entity 108 negotiate via the peer-to-peer orchestrator 120 of the first entity 102 and the peer-to-peer orchestrator 128 of the second entity 108.

The cross-stakeholder machine learning orchestrator 118 of the first entity 102 may receive a feasibility check report from the radio access network machine learning orchestrator 136 of the first domain of the first stakeholder 104 and/or from the core access network machine learning orchestrator 142 of the second domain of the first stakeholder 106. The cross-stakeholder machine learning orchestrator 118 of the first entity 102 may analyze whether the end-to-end machine learning requirements. For example, the analysis may conclude that the first stakeholder may be able to support one part of end-to-end machine learning requirements and may need to rely on other stakeholders to support other part of end-to-end machine learning requirements.

According to an example, the first stakeholder is capable to provide the end-to-end resource and service requirements that are underlined in the following table 3.

| | |
|---|---|
| Attribute Name | Attribute Value |
| serviceProfileld | E2Eservice |
| pLMNInfoList | pLMN1 |
| maxNumberofUEs | 700 |
| coverageArea | Area2 |
| dLLatency | 5ms |
| uLLatency | 5ms |
| uEMobilityLevel | high |
| availability | 99.99 |
| dLThpt | 100 Mbps |
| uLThpt | 10 Mbps |
| maxNumberofPDUSessions | 7000 |
| averagePRBsratio [optional] | 0.2 |
| offeredPerUserPrice | 10 |
| offeredPerPRBPrice [optional] | 0 |
| performanceTolerance | 0.02 |
| compensationForNonFullfillme | Yes |
| nt | |
| computational Resources | Yes |
| requestMemory | 128 MB |
| requestCores | 12 |
| MLInvolvement | Yes |

According to an example, other end-to-end resource and service requirements that are underlined in the following table 4 need to be provided by the second stakeholder or another stakeholder.

| | |
|---|---|
| Attribute Name | Attribute Value |
| serviceProfileld | E2Eservice |
| pLMNInfoList | pLMN1 |
| maxNumberofUEs | 300 |
| coverageArea | Area3 |
| dLLatency | 5ms |
| uLLatency | 5ms |
| uEMobilityLevel | high |
| availability | 99.99 |
| dLThpt | 100 Mbps |
| uLThpt | 10 Mbps |
| maxNumberofPDUSessions | 3000 |
| averagePRBsratio [optional] | 0.2 |
| offeredPerUserPrice | 10 |
| offeredPerPRBPrice [optional] | 0 |
| performanceTolerance | 0.02 |
| compensationForNonFullfillme | Yes |
| nt | |
| computational Resources | Yes |
| requestMemory | 128 MB |
| requestCores | 4 |
| MLInvolvement | Yes |

In case the end-to-end resource and service requirement and/or the end-to-end machine learning requirements cannot be satisfied by the first stakeholder, step 16 is executed. Otherwise step 18 is executed.

### Step 16:

The cross-stakeholder management and orchestrator 116 of the first entity 102 and the cross-stakeholder management and orchestrator 124 of the second entity 108 negotiate related to the end-to-end resource and service requirements.

In the example, the cross-stakeholder management and orchestrator 116 of the first entity 102 and the cross-stakeholder management and orchestrator 124 of the second entity 108 negotiate via the peer-to-peer orchestrator 120 of the first entity 102 and the peer-to-peer orchestrator 128 of the second entity 108.

### Step 17:

The cross-stakeholder machine learning orchestrator 118 of the first entity 102 and the cross-stakeholder machine learning orchestrator 126 of the second entity 108 negotiate related to the end-to-end machine learning service requirements.

### Step 18:

The cross-stakeholder intent manager 114 of the first entity 102 receives an acknowledgement or not acknowledgement regarding the availability, i.e., the feasibility, of the end-to-end resource and service requirements from the cross-stakeholder management and orchestrator 116 of the first entity 102.

The cross-stakeholder intent manager 114 of the first entity 102 may receive feasibility check reports from the cross-stakeholder management and orchestrator 116 of the first entity 102.

The cross-stakeholder intent manager 114 of the first entity 102 may analyze the feasibility report and determine whether the network intent can be satisfied or not. If the cross-stakeholder intent manager 114 determines that the first stakeholder cannot satisfy the network intent, the step 19 will be executed. Otherwise, step 20 is executed.

### Step 19:

The cross-stakeholder intent manager 114 of the first entity 102 and the cross-stakeholder intent manager 122 of the second entity 108 negotiate related to the intent.

In the example, the cross-stakeholder intent manager 114 of the first entity 102 and the cross-stakeholder intent manager 122 of the second entity 108 negotiate via the peer-to-peer orchestrator 120 of the first entity 102 and the peer-to-peer orchestrator 128 of the second entity 108.

### Step 20:

The cross-stakeholder intent manager 114 of the first entity 102 sends an acknowledgement or not acknowledgement regarding the availability, i.e., the feasibility, of the network intent, e.g., performance intent, to the customer.

According to some embodiments, a step requesting a requirement may be sent in case a corresponding machine learning model is to be instantiated or omitted otherwise.

According to some embodiments, a step sending an acknowledgement or not acknowledgement may comprise sending the acknowledgement in case a corresponding machine learning model is instantiated or available to be instantiated or otherwise sending the not acknowledgement.

According to some embodiments, a machine learning orchestrator receiving a requirement may perform a feasibility check, e.g., by interacting with domain specific network entities, e.g., base station, core network function, on what can or cannot be realized with respect to the domain-specific machine learning requirements.

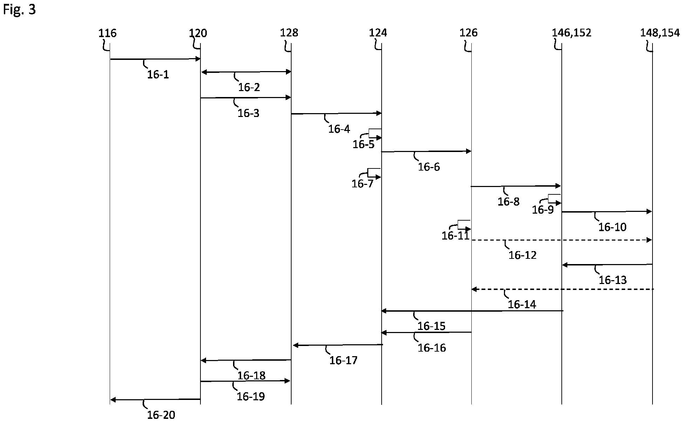

Figure 3 depicts a second part of the exemplary sequence flow diagram for a cross-stakeholder feasibility check. The second part comprises details of the step 16 depicted in figure 2.

The steps in the exemplary second part of the sequence are as follows:

### Step 16-1:

The cross-stakeholder management and orchestrator 116 of the first entity 102 asks the peer-to-peer orchestrator 120 of the first entity 102 to check if unachievable end-to-end resource and service requirements can be satisfied by another stakeholder.

In the example, the cross-stakeholder management and orchestrator 116 of the first entity 102 asks the peer-to-peer orchestrator 120 of the first entity 102 after analyzing that end-to-end resource and service requirements cannot be completely satisfied by the first stakeholder.

An example for the end-to-end resource and service requirements cannot be completely satisfied by the first stakeholder is given in table 3.

### Step 16-2:

The peer-to-peer orchestrator 120 of the first entity 102 performs discovery of other peer operators that can satisfy the end-to-end resource and service requirements which cannot be completely satisfied by the first stakeholder.

The peer-to-peer orchestrator 120 of the first entity 102 performs discovery for example for the end-to-end resource and service requirements given in table 3.

The peer-to-peer orchestrator 120 of the first entity 102 negotiates or interacts with the corresponding peer-to-peer orchestrator of the other stakeholder.

In the example, the peer-to-peer orchestrator 120 of the first entity 102 negotiates with the peer-to-peer orchestrator 128 of the second entity 108.

In the example, the negotiation is according to the established trust-level, i.e., full-trust, partial-trust or no-trust. This means, the negotiation is only with a peer-to-peer orchestrator that has at least a partial-trust level.

The peer-to-peer orchestrator 120 of the first entity 102 may negotiate 1:1, i.e., with one other peer-to-peer orchestrator or 1:N, i.e., with N other peer-to-peer orchestrators.

### Step 16-3:

The peer-to-peer orchestrator 120 of the first entity 102 sends the required end-to-end resource and service requirements to the peer-to-peer orchestrator 128 of the second entity 108.

### Step 16-4:

The peer-to-peer orchestrator 128 of the second entity 108 sends the required end-to-end resource and service requirements to the cross-stakeholder management and orchestrator 124 of the second entity 108.

In addition, information on offered price or compensation in case the request is fulfilled or not fulfilled may also be included.

Step 16-5 to Step 16-16 are the same as Step 4 to Step 15 in the first part with an exception that these interactions are happening in the second stakeholder instead of the first stakeholder.

### Step 16-17:

The cross-stakeholder management and orchestrator 124, after receiving the feasibility check reports from the radio access network management and orchestrator 146, and the core network management and orchestrator 152, and the radio access network machine learning orchestrator 148, and the core machine learning orchestrator 154 analyzes whether the requested end-to-end resource and service requirements requested by the peer-to-peer orchestrator 128 of the second entity 108 can be satisfied or not and correspondingly sends an acknowledgement or not acknowledgement to the peer-to-peer orchestrator 128 of the second entity 108.

Based on the outcome of feasibility check, the peer-to-peer orchestrator 128 of the second entity 108 decides whether to accept or not the request. The peer-to-peer orchestrator 128 of the second entity 108 may also considering other criteria such as offered price.

Since the request may be sent to multiple stakeholders, the peer-to-peer orchestrator 128 of the second entity 108 may also accept to provide a "sub-part" of the end-to-end resource and service requirements.

### Step 16-18:

The peer-to-peer orchestrator 128 of the second entity 108 sends an acknowledgement or not acknowledgement to the peer-to-peer orchestrator 120 of the first entity 102 with regard to the requested end-to-end resource and service requirements from the peer-to-peer orchestrator 120 of the first entity 102. The peer-to-peer orchestrator 128 of the second entity 108 may provide additional details on the agreement or contract of this collaboration.

Details may include, e.g., cost, validity of the contract, an indication whether an indicated fine is acceptable if some terms of the contract are violated.
the peer-to-peer orchestrator 120 of the first entity 102 may receive multiple responses from other peer-to-peer orchestrators including the peer-to-peer orchestrator 128 of the second entity 108.

The peer-to-peer orchestrator 120 of the first entity 102 may decide which offer or combination of offers to accept based on the responses received from one or more peer-to-peer orchestrators.

### Step 16-19:

The peer-to-peer orchestrator 120 of the first entity 102 sends an acknowledgement or not acknowledgement for the peer collaboration with one or more peer-to-peer orchestrators based on the details provided by other more peer-to-peer orchestrators.

### Step 16-20:

The peer-to-peer orchestrator 120 of the first entity 102 responds with an acknowledgement or not acknowledgement to the cross-stakeholder management and orchestrator 116 depending on the information received in step 16-18.

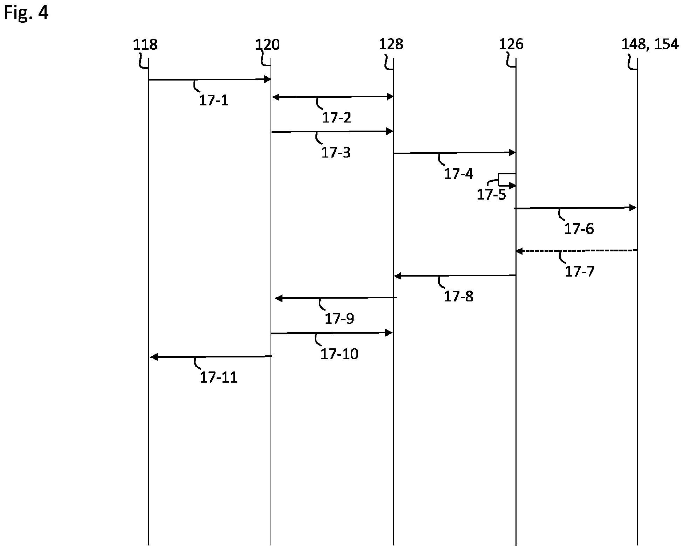

Figure 4 depicts a third part of the exemplary sequence flow diagram for a cross-stakeholder feasibility check.

The third part comprises details of the step 17 depicted in figure 2.

The steps in the exemplary third part of the sequence are as follows:

### Step 17-1:

The cross-stakeholder machine learning orchestrator 118 of the first entity 102, after analyzing that end-to-end machine learning requirements cannot be completely satisfied by the first stakeholder, asks the peer-to-peer orchestrator 120 of the first entity 102 to check if the end-to-end machine learning requirements that cannot be completely satisfied by the first stakeholder, can be satisfied by other stakeholders.

### Step 17-2:

The peer-to-peer orchestrator 120 of the first entity 102 performs discovery of other peer stakeholders can satisfy the end-to-end machine learning requirements that cannot be completely satisfied by the first stakeholder.

The peer-to-peer orchestrator 120 of the first entity 102 negotiates or interacts with the corresponding peer-to-peer orchestrators, e.g., the peer-to-peer orchestrator 128 of the second entity according to the established trust-level, i.e., full-trust, partial-trust or no-trust. This means, the negotiation is only with a peer-to-peer orchestrator that has at least a partial-trust level.

The peer-to-peer orchestrator 120 of the first entity 102 may negotiate 1:1, i.e., with one other peer-to-peer orchestrator or 1:N, i.e., with N other peer-to-peer orchestrators.

### Step 17-3:

The peer-to-peer orchestrator 120 of the first entity 102 sends the required end-to-end machine learning requirements to the other peer-to-peer orchestrators, in the example, to the peer-to-peer orchestrator 128 of the second entity 108. Table 2a and 2b provide examples for the end-to-end machine learning requirements.

### Step 17-4:

The peer-to-peer orchestrator 128 of the second entity 108 sends the required end-to-end machine learning requirements to the cross-stakeholder machine learning orchestrator 126 of the second entity 108.

### Step 17-5:

The cross-stakeholder machine learning orchestrator 126 of the second entity 108 translates the end-to-end machine learning requirements into radio access network machine learning requirements and core machine learning requirements.

### Step 17-6:

The radio access network machine learning orchestrator 148 receives the radio access network machine learning requirements from the cross-stakeholder machine learning orchestrator 126 of the second entity 108.

The core network machine learning orchestrator 154 receives the core machine learning requirements from the cross-stakeholder machine learning orchestrator 126 of the second entity 108.

### Step 17-7:

The radio access network machine learning orchestrator 148 sends an acknowledgement or not acknowledgement regarding the radio access network machine learning requirements to the cross-stakeholder machine learning orchestrator 126 of the second entity 108.

The core network machine learning orchestrator 154 sends an acknowledgement or not acknowledgement regarding the core machine learning requirements to the cross-stakeholder machine learning orchestrator 126 of the second entity 108.

### Step 17-8:

The cross-stakeholder machine learning orchestrator 126 of the second entity 108, after receiving the feasibility check reports from the radio access network machine learning orchestrator 148 and the core network machine learning orchestrator 154, analyzes whether the end-to-end machine learning requirements can be satisfied or not and correspondingly sends an acknowledgement or not acknowledgement to the requested end-to-end machine learning requirements to the peer-to-peer orchestrator 128 of the second entity 108.

### Step 17-9:

The peer-to-peer orchestrator 128 of the second entity 108 sends an acknowledgement or a not acknowledgement to the peer-to-peer orchestrator 120 of the first entity 102 with regard to the requested end-to-end machine learning requirements from the peer-to-peer orchestrator 128 of the second entity 108.

The peer-to-peer orchestrator 128 of the second entity 108 may provide additional details.

Details may include, e.g., cost, validity of the contract, an indication whether an indicated fine is acceptable if some terms of the contract are violated.

### Step 17-10:

The peer-to-peer orchestrator 120 of the first entity 102 sends an acknowledgement or not acknowledgement for the peer collaboration based on the details provided by the peer-to-peer orchestrator 128 of the second entity 108 in step 17-9.

### Step 17-11:

The peer-to-peer orchestrator 120 of the first entity 102 responds with an acknowledgement or not acknowledgement to the cross-stakeholder management and orchestrator 118 of the first entity 102 depending on the information received in step 17-9.

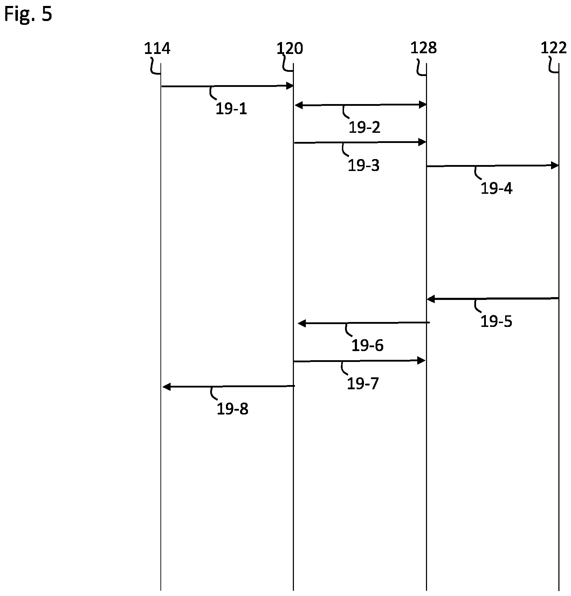

Figure 5 depicts a fourth part of the exemplary sequence flow diagram for a cross-stakeholder feasibility check.

The fourth part comprises details of the step 19 depicted in figure 2.

The steps in the exemplary third part of the sequence are as follows:

### Step 19-1:

The cross-stakeholder intent manager 114 of the first entity 102, after analyzing that network intent, e.g., performance intent, cannot be completely satisfied by the first stakeholder, asks the peer-to-peer orchestrator 120 of the first entity 102 to check if network intent that cannot be provided by the first stakeholder can be satisfied by other stakeholders.

### Step 19-2:

The peer-to-peer orchestrator 120 of the first entity 102 performs discovery of other stakeholders that can satisfy the network intent that cannot be provided by the first stakeholder.

The peer-to-peer orchestrator 120 of the first entity 102 negotiates or interacts with the corresponding peer-to-peer orchestrators, e.g., the peer-to-peer orchestrator 128 of the second entity 108, according to the established trust-level, i.e., full-trust, partial-trust or no-trust. This means, the negotiation is only with a peer-to-peer orchestrator that has at least a partial-trust level.

The peer-to-peer orchestrator 120 of the first entity 102 may negotiate 1:1, i.e., with one other peer-to-peer orchestrator or 1:N, i.e., with N other peer-to-peer orchestrators.

### Step 19-3:

The peer-to-peer orchestrator 120 of the first entity 102 sends the required network intent that cannot be provided by the first stakeholder to the peer-to-peer orchestrator 128 of the second entity 108.

### Step 19-4:

The peer-to-peer orchestrator 128 of the second entity 108 sends the required network intent to the cross-stakeholder intent manager 122 of the second entity 108.

### Step 19-5:

The cross-stakeholder intent manager 122 of the second entity 108, after receiving feasibility check reports regarding the required network intent from, e.g., network entities not shown in the Figure 5, analyzes whether the network intent can be satisfied or not and correspondingly sends an acknowledgement or not acknowledgement regarding the requested network intent to the peer-to-peer orchestrator 128 of the second entity 108.

### Step 19-6:

The peer-to-peer orchestrator 128 of the second entity 108 sends an acknowledgement or not acknowledgement to the peer-to-peer orchestrator 120 of the first entity 102 with regard to the requested network intent.

The peer-to-peer orchestrator 128 of the second entity 108 may provide additional details.

Details may include, e.g., cost, validity of the contract, an indication whether an indicated fine is acceptable if some terms of the contract are violated.

### Step 19-7:

The peer-to-peer orchestrator 120 of the first entity 102 sends an acknowledgement or not acknowledgement for the peer collaboration. The acknowledgement or not acknowledgement may be based on the acknowledgement or not acknowledgement or details provided by the peer-to-peer orchestrator 128 of the second entity 108 in step 19-6.

### Step 19-8:

The peer-to-peer orchestrator 120 of the first entity 102 responds with an acknowledgement or not acknowledgement to the cross-stakeholder intent manager 114 depending on the information received in step 19-6.

According to some embodiments, the peer-to-peer orchestrator is responsible for determining and communicating the degree of trust among stakeholder, to be used as input into translation and negotiation of cross- stakeholder network and service performance requirements into stakeholder-specific network and service performance requirements, as well as cross-stakeholder machine learning performance requirements into stakeholder-specific machine learning performance requirements. From a security perspective, the link between any two peer-to-peer orchestrators in the stakeholder ecosystem may use standard authentication-based protocols, including but not restricted to certificate-based authentication, and may use encryption to ensure the integrity of and prevent man-in-the-middle attacks on the information being sent between any two peer-to-peer orchestrators.

Definition and measures of trust:
From a trust perspective, trust between any two stakeholders can be comprised of two options: full trust resulting from a bilateral service level agreement (SLA) or partial trust that is the transitive closure of full trust.
Full trust: there is a full trust relationship between stakeholder A and stakeholder M if and only if there is a bilateral service-level agreement (SLA) between them.
Partial trust: there is a partial trust relationship between stakeholder A and stakeholder M if and only if there exists some number n > 0 and a set of stakeholder {stakeholder 1, _{...}., stakeholder n} such that
   1. for all i s.t. 1 <= i < n, there is a full trust relationship between stakeholder i and stakeholder i+1,
   2. there is a full trust relationship between stakeholder A and stakeholder 1
   3. there is a full trust relationship between stakeholder n and stakeholder M
• No trust: there is neither full trust nor partial trust between stakeholder A and stakeholder M

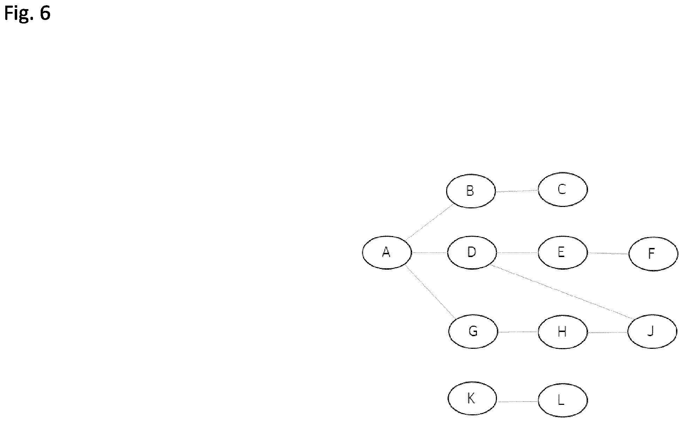

An example is shown in figure 6.

Figure 6 depicts a graph of the stakeholder A, B, C, D, E, F, G, J. The links shown indicate the presence of bilateral service level agreements: hence, full trust relationships.

For example, in figure 6, A has a full trust relationship with each of B, D, G, while B has a full trust relationship with C, and so forth. Stakeholders that have a full trust relationship are neighbors in the graph.

According to an example, the stakeholders have an associated attenuation of trust table, which lists the knowledge it has of its attenuation of trust levels with other stakeholder.

For the trust relationships in the above figure, the attenuation of trust table for stakeholder A in the example is:

| | |
|---|---|
| B | 1 |
| C | 2 |
| D | 1 |
| E | 2 |
| F | 3 |
| G | 1 |
| H | 2 |
| J | 2 |
| K | ∞ |
| K | ∞ |

Discovery and Trust Establishment at Operator Ecosystem Initialization:
To compute full and partial trust relationships in a peer-to-peer fashion, it is assumed that no stakeholder has a priori knowledge of other stakeholder trust relationships - that is the graph topology above is unknown. Also, given the peer-to-peer nature of the orchestration, it is assumed that there is no centralized entity that will carry out the graph traversal computations.

According to an example, an algorithm to compute these trust relationships is distributed or decentralized, as well as asynchronous given that network domains are independent. To this end, a distance vector algorithm may be used to compute trust relationships in a peer-to-peer manner at stakeholder ecosystem initialization.

In particular, the standard distance vector algorithm that forms the essence of the Border Gateway Protocol for interdomain routing may be used. Kurose J, F Ross KW. Computer Networking: A Top-Down Approach. Eighth ed. Hoboken: Pearson; 2021 discloses aspects of the standard distance vector algorithm.

According to an example, two nodes are considered as neighbors if and only if they have a service level agreement between them. The weights of the links in the graph are set to be 1. According to an example, two nodes are considered to have full trust if the computed distance vector between them is 1, and partial trust if the computed distance vector between them is strictly greater than 1 (but less than infinity). Upon termination, the distance vector algorithm also yields as output the attenuation tables.

Once computed, the trust tables and attenuation tables are expected to be largely stable and hence available when a new network intent arrives at the cross-stakeholder intent manager.

Updates when SLAs are changed:
The trust and attenuation tables may be updated whenever a new service level agreement is formed or rescinded between two stakeholders by recomputation of the distance vector algorithm initiated by the node with the changed status, resulting in eventual consistency trust knowledge across the trust tables of all the nodes. Note that this trust table is first computed at initialization of the stakeholder ecosystem, and then updated when new SLAs are created or existing ones removed, hence is always available when an intent arrives.

Discovery and Trust Establishment upon Intent Arrival:
When a cross-stakeholder intent arrives at a stakeholder, this stakeholder needs to determine with which stakeholder or stakeholders it should attempt to coordinate. To do so, it will look up its trust table and attenuation of trust table to determine which stakeholder it would like to contact on a 1-1 basis or 1-N basis. Furthermore, stakeholder-specific policies around trust may also be specified and applied, analogous to router policies, e.g., in the border gateway protocol, BGP. These trust-related policies may specify what information and/or with which granularity the information is passed along to other stakeholders, depending on full vs. partial trust, and trust attenuation levels.

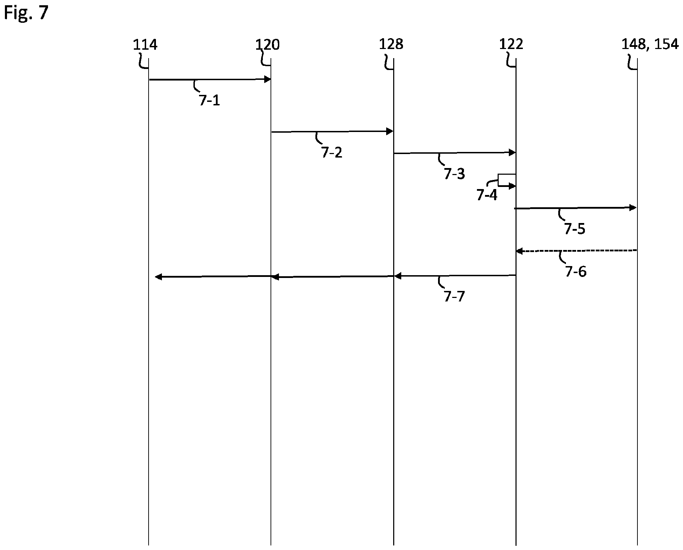

Figure 7 depicts a sequence flow diagram for a cross-stakeholder configuration of machine learning models.

Hereby, the procedures for cross-operator deploying of machine learning models and creating of machine learning composition are described. Such procedures rely on the level of trust established as well as the attenuation of trust among the involved operators. The machine learning construct may be created across stakeholders in order to leverage on the best performing machine learning models available among multiple stakeholders as well as to achieve better flexibility in building the machine learning based solution for specific use case. Stakeholder-specific policies around trust will impact the machine learning construct, as these policies may affect which machine learning model parameters and configuration attributes are shared, as well as the level of granularity of information. For example, more detailed information will be shared among stakeholders with full trust relationships, while less and less detailed may be shared as the trust attenuation level increases.

The cross-stakeholder configuration comprises the following steps:

### Step 7-1:

Based on the outcome of a cross-operator machine learning feasibility check, the cross-stakeholder machine learning orchestrator 114 asks the peer-to-peer orchestrator 120 of the first entity 102 to put into operation feasible end-to-end machine learning requirements that are needed for fulfilment of the end-to-end machine learning requirements from the second stakeholder, e.g., in terms of capabilities, features, performance, or configuration. The end-to-end machine learning requirements may be expressed for individual machine learning models or for a machine learning model composition, e.g., in form of tables, e.g., table 2a and 2b.

### Step 7-2:

The peer-to-peer orchestrator 120 of the first entity 102 sends the request for fulfilment of feasible end-to-end machine learning requirements to the corresponding peer-to-peer orchestrator, e.g., the peer-to-peer orchestrator 128 of the second entity 108 according to the established trust-level, i.e., full-trust, partial-trust or no-trust. This means, the negotiation is only with a peer-to-peer orchestrator that has at least a partial-trust level.

The peer-to-peer orchestrator 120 of the first entity 102 may negotiate 1:1, i.e., with one other peer-to-peer orchestrator or 1:N, i.e., with N other peer-to-peer orchestrators.

### Step 7-3:

The peer-to-peer orchestrator 128 of the second entity 108 sends end-to-end machine learning requirements to the cross-stakeholder machine learning orchestrator 122 of the second entity 108. Based on established trust level and trust attenuation, the peer-to-peer orchestrator 128 of the second entity 108 may in addition provide the according policies for configuration. E.g., if there is no full trust established, only selected machine learning models, or models deployed in selected domains can be used to fulfil the requirements.

### Step 7-4:

The cross-stakeholder machine learning orchestrator 122 of the second entity 108 translates the received end-to-end machine learning requirements and if available further configuration policies into radio access network machine learning requirements and core machine learning requirements.

### Step 7-5:

The cross-stakeholder machine learning orchestrator 122 of the second entity 108 sends the radio access network machine learning requirements to the radio access network machine learning orchestrator 148 and the core machine learning requirements to the core machine learning orchestrator 154.

### Step 7-6:

The radio access network machine learning orchestrator 148 configures the radio access network machine learning models or model compositions accordingly.

The radio access network machine learning orchestrator 148 may send configuration information to the cross-stakeholder machine learning orchestrator 122 of the second entity 108

The core machine learning orchestrator 154configures the core network machine learning models or model compositions accordingly.

The core network machine learning orchestrator 148 may send configuration information to the cross-stakeholder machine learning orchestrator 122 of the second entity 108.

### Step 7-7:

The cross-stakeholder machine learning orchestrator 122 of the second entity 108 sends configuration information that is forwarded via the peer-to-peer orchestrator 128 of the second entity 108 to the peer-to-peer orchestrator 120 of the first entity 102 and from the peer-to-peer orchestrator 120 of the first entity 102 to the cross-stakeholder machine learning orchestrator 114 of the first entity 102.

The configuration information may be the configuration information received in step 6.

The configuration information may contain the following:
Identifications of machine learning models and machine learning model compositions that have been trained and deployed for the first stakeholder.

Information on how to access the deployed machine learning models and machine learning model compositions, e.g., uniform resource locator, URL, information.

Information on how to access the output of deployed machine learning models and machine learning model compositions, e.g., uniform resource locator, URL, information.

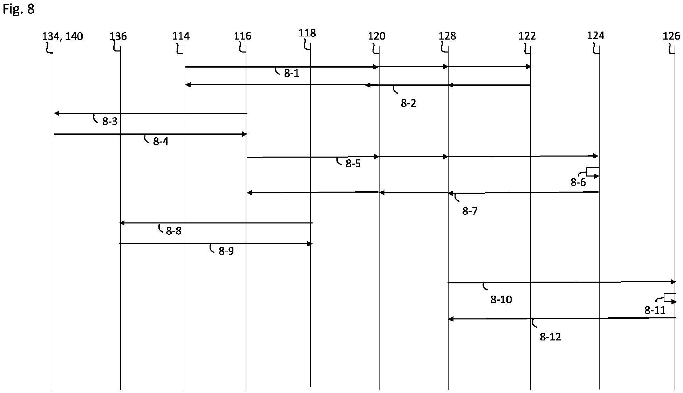

Figure 8 depicts a sequence flow diagram for reporting.

The reporting comprises the following steps:

### Step 8-1:

The cross-stakeholder intent manager 114 of the first entity 102 requests or subscribes to a network intent report from the cross-stakeholder intent manager 122 of the second entity 108 via the peer-to-peer orchestrators 120, 128.

This request or subscription relates to the network intent that the second stakeholder has agreed to satisfy with the first stakeholder.

### Step 8-2:

Once the second stakeholder determines whether the network intent is satisfied or not, the cross-stakeholder intent manager 122 of the second entity 108 sends the network intent report to the cross-stakeholder intent manager 114 of the first entity 102 via the peer-to-peer orchestrators 120, 128.

The report may include details such as intent fulfilled or not and if not which particular aspect is not fulfilled such as network service performance related, network resource related, machine learning performance, machine learning capabilities, or machine learning composition related.

### Step 8-3:

The cross-stakeholder management and orchestrator 116 of the first entity 102 requests or subscribes to network service and resource performance report from the radio access network management and orchestrator 134 and the core management and orchestrator 140. This request or subscription relates to the network service and resource requirements that the first stakeholder has to satisfy.

### Step 8-4:

Once the radio access network management and orchestrator 134 and the core management and orchestrator 140 determine whether network service and resource requirements are satisfied or not, it sends the network service and resource performance report to the cross-stakeholder management and orchestrator 116 of the first entity 102. The report may include details such as achieved throughput, achieved latency, number of successful pdu sessions, number of users served, achieved coverage, utilized computational or networking resources.

### Step 8-5:

The cross-stakeholder management and orchestrator 116 of the first entity 102 requests or subscribes to network service a resource performance report from the cross-stakeholder management and orchestrator 124 of the second entity 108 via the peer-to-peer orchestrators 120, 128. This request or subscription relates to the network service and resource requirements that second stakeholder has agreed to satisfy with the first stakeholder.

### Step 8-6:

The cross-stakeholder management and orchestrator 124 of the second entity 108 aggregates network service and resource performance reports received from the radio access network management and orchestrator and the core management and orchestrator (not depicted in figure 8).

### Step 8-7:

The cross-stakeholder management and orchestrator 124 of the second entity 108 sends the aggregated network service and resource performance report to the cross-stakeholder management and orchestrator 116 of the first entity 102 via the peer-to-peer orchestrators 120, 128.

### Step 8-8:

The cross-stakeholder machine learning operator 118 of the first entity 102 requests or subscribes to machine learning performance or configuration report from the radio access network machine learning orchestrator 136 and the core machine learning orchestrator 142. This request or subscription relates to the machine learning performance or configuration requirements that first stakeholder has to satisfy.

### Step 8-9:

Once the radio access network machine learning orchestrator 136 and the core machine learning orchestrator 142 determine whether machine requirements are satisfied or not, it sends the machine learning performance or configuration report to the cross-stakeholder machine learning operator 118 of the first entity 102. The report may include details such as achieved accuracy, mean squared error, mean absolute error, or confusion matrix of one or more machine learning models.

### Step 8-10:

The cross-stakeholder machine learning operator 118 of the first entity 102 requests or subscribes to machine learning performance or configuration report from the cross-stakeholder machine learning operator 126 of the second entity 108 via the peer-to-peer orchestrators 120, 128. This request or subscription relates to the machine learning performance or configuration requirements that the second stakeholder has agreed to satisfy with the first stakeholder.

### Step 8-11:

The cross-stakeholder machine learning operator 126 of the second entity 108 aggregates machine learning performance or configuration reports received from the radio access network management and orchestrator and the core management and orchestrator (not depicted in figure 8).

### Step 8-12:

The cross-stakeholder machine learning operator 126 of the second entity 108 sends the aggregated machine learning performance or configuration report to the cross-stakeholder machine learning operator 118 of the first entity 102 via the peer-to-peer orchestrators 120, 128.

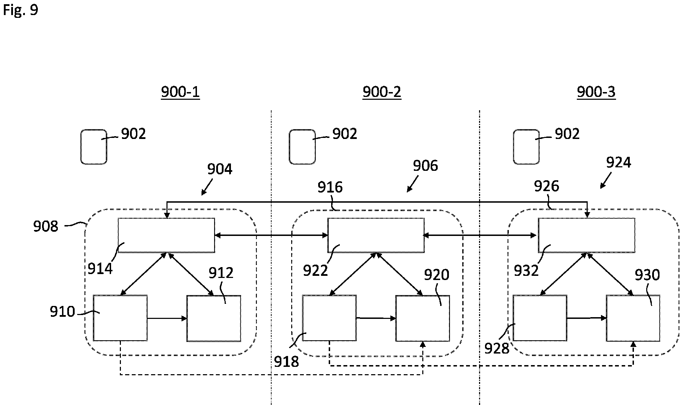

Figure 9 schematically depicts scenarios of cross-stakeholder machine learning composition. The scenario are explained for operators as example for the stakeholders.

In Scenario 900-1 a user equipment (UE) 902 is in coverage of a terrestrial network (TN) that supports a first public land mobile network (PLMN) 904 of a first operator as well as a non-terrestrial network (NTN) that supports a second PLMN 906 of a second operator Resources 908 of the first operator comprise a first machine learning model (ML) 910 that is configured for quality of service (QoS) prediction, a second ML model 912 that is configured for traffic steering, and an orchestrator 914 of the first operator that comprises a cross-stakeholder management and orchestrator, a cross-stakeholder machine learning orchestrator and a peer-to-peer orchestrator of the first operator. Suddenly, the UE 902 joins a resource demanding metaverse call or goes above the coverage area of the TN. The first machine learning (ML) model 910 predicts the QoS degradation of the UE 902 and provides this information to the second ML model 912. If the changing of the first ML model 910 and the second ML model 912 is not able to resolve the problem of high throughout demand or need for extended coverage using the available first PLMN 904 resources, this will be detected by the cross-stakeholder management and orchestrator of the first operator by monitoring network key performance indicators (KPIs). In addition, or alternatively, the cross-stakeholder machine learning orchestrator of operator 1 can monitor the output of QoS prediction and detect that QoS degradation is expected to last. In such a case, the first operator needs to rely on resources and capabilities from the second operator, e.g., for coverage related issues, or some other operator, e.g., for throughput related issues.

Resources 916 of second operator comprise a third ML model 918 that is configured for quality of service (QoS) prediction, a fourth ML model 920 that is configured for traffic steering, and an orchestrator 922 of the second operator that comprises a cross-stakeholder management and orchestrator, a cross-stakeholder machine learning orchestrator and a peer-to-peer orchestrator of the second operator.

According to some examples, the third ML model 918 is configured for QoS prediction of a particular UE with higher accuracy than the first ML model 910.

The peer-to-peer orchestrator of the first operator informs the peer-to-peer orchestrator of the second operator over a peer-to-peer interface between the peer-to-peer orchestrators, also specifying the information on predicted QoS degradation as output of the first ML model 910. The peer-to-peer orchestrator of the second operator may either convey this information directly to the fourth ML model 920 in the second PLMN 906, or it will provide the information needed to temporarily chain the first ML model 910 and the fourth ML model 920. In such a way, by using the output of the first ML model 910, the fourth ML model 920 may decide to enhance the existing connection via the first PLMN 904 with additional connection via the second PLMN 906, e.g., via the NTN, in order to address the coverage problem or if possible the throughout problems. Further, in the case that the third ML model 918 can provide the same or similar input to the fourth ML model 920, , the fourth ML model 920 will take outputs of the third ML model 918 as input data.

In a second scenario 900-2 the UE 902 might be in coverage of only one NTN, e.g., the second PLMN 906 and therefore the steering of traffic may rely only on the third ML model 918 and the fourth ML model 920 and may be done by means of diverse satellite access. In the case of multiple NTN coverage, the same/similar procedures as in the first Scenario 900-1 would apply.

In a third scenario 900-3 while the UE 902 is moving towards the coverage area of a third PLMN 924 in addition to NTN coverage, the UE 902 may initiate a voice call, for which the available resources of the second PLMN 906 are sufficient. In such a case the third ML model 918 may predict that there will be no QoS degradation for UE 902.

Resources 926 of a third operator that provides the third PLMN 924 comprise a fifth ML model 928 that is configured for quality of service (QoS) prediction, a sixth ML model 930 that is configured for traffic steering, and an orchestrator 932 of the third operator that comprises a cross-stakeholder management and orchestrator, a cross-stakeholder machine learning orchestrator and a peer-to-peer orchestrator of the third operator.

The peer-to-peer orchestrator of the second operator informs the peer-to-peer orchestrator of the third operator that there will be no QoS degradation for UE 902. The cross-stakeholder machine learning orchestrator of the second operator may send this information via the peer-to-peer orchestrators of the second operator and the third operator to the cross-stakeholder machine learning orchestrator of the third operator. Similar to the first scenario, the cross-stakeholder machine learning orchestrator of the third operator may either convey this information directly to the matching sixth ML model 930 in the third PLMN 924, or it will provide the information needed to temporarily chain the third ML model 918 and the sixth ML model 930. In such a way, by using the output of the third ML model 918, the sixth ML model 930 may decide that no additional connections or traffic split is needed by using resources of the third PLMN 923. As the fifth ML model 928 may be able to provide QoS predictions only with certain delay, e.g., once UE enters coverage area of the third PLMN , the sixth ML model 930 may rely on the output from the third ML model 918 during the transition phase. Later on, the sixth ML model 930 may rely on either the output of third ML model 918 or the fifth ML model 928 depending on the achieved accuracy or confidence of predictions.

Overall, the temporary on demand ML model chaining enables efficient cooperation between the operators in order to fulfill service requirements while optimizing the resource consumption and total cost of ownership.

## Claims

1. A first method comprising receiving (16-1, 17-1), at a first apparatus (120) that is configured to manage or orchestrate network resources of a first stakeholder, a requirement, determining, at the first apparatus (120), at least a part of the requirement that needs to be orchestrated with a second apparatus (128) that is configured to manage or orchestrate network resources for a second stakeholder, and sending (16-3, 17-3) a request regarding at least a part of the requirement that needs to be orchestrated with the second apparatus (128) to the second apparatus (128).

2. The method according to claim 1, **characterized in that** the requirement comprises a network intent, a network resource, a network service, a machine learning model, a composition of a machine learning model, or an information about a trust relationship between the first stakeholder and the second stakeholder.

3. The method according to one of the previous claims, **characterized in that** the requirement comprises a machine learning model performance, or a machine learning model configuration.

4. The method according to one of the previous claims, **characterized in that** the method comprises determining, sending, receiving, or requesting a report regarding a network resource, a service requirement, a machine learning model performance, or a machine learning model configuration.

5. A second method comprising receiving (16-1, 17-1), from a first apparatus (120) that is configured to manage or orchestrate network resources of a first stakeholder, at a second apparatus (128) that is configured to manage or orchestrate network resources of a second stakeholder, a request regarding at least a part of a requirement that needs to be orchestrated with the second apparatus (128), determining at the second apparatus (128) at least a part of the requirement that can be orchestrated with the second apparatus (128), and sending (16-18, 17-9) the response regarding the requirement, to the first apparatus (120).

6. The method according to claim 5, **characterized in that** the request comprises a network intent, a network resource, a network service, a machine learning model, a composition of a machine learning model, or an information about a trust relationship between the first stakeholder and the second stakeholder.

7. The method according to one of the claims 5 or 6, **characterized in that** the requirement comprises a machine learning model performance or a machine learning model configuration.

8. The method according to one of the claims 5 to 7, **characterized in that** the method comprises receiving a request for a report regarding a network resource, a service requirement, a machine learning model performance, or a machine learning model configuration from the first apparatus (120), determining the report, and sending the report to the first apparatus (120).

9. The method according to one of the claims 5 to 8, **characterized in that** the method comprises sending (16-4, 17-4) a request regarding at least a part of the requirement that needs to be orchestrated to an apparatus (124, 126) of the second stakeholder, receiving (16-17, 17-8) a response regarding at least a part of the requirement that needs to be orchestrated from the apparatus (124, 126) of the second stakeholder, and determining the response to the first apparatus (120) depending on the response from the apparatus (124, 126) .

10. A first apparatus (120), wherein the first apparatus comprises means for managing network resources of a first stakeholder, receiving a requirement, determining at least a part of the requirement that needs to be orchestrated with a second apparatus (128) that is configured to manage or orchestrate network resources for a second stakeholder, and sending (16-3, 17-3) a request regarding at least a part of the requirement that needs to be orchestrated with the second apparatus (128) to the second apparatus (128).

11. The first apparatus (120) according to claim 10, **characterized in that** the requirement comprises a network intent, a network resource, a network service, a machine learning model, a composition of a machine learning model, or an information about a trust relationship between the first stakeholder and the second stakeholder.

12. The first apparatus (120) according to one of the claims 10 or 11, **characterized in that** the requirement comprises a machine learning model performance or a machine learning model configuration.

13. The first apparatus (120) according to one of the claims 10 to 12, **characterized in that** the first apparatus comprises means for determining, sending, receiving, or requesting a report regarding a network resource, a service requirement, a machine learning model performance, or a machine learning model configuration.

14. A second apparatus (128), wherein the second apparatus (128) comprises means for managing network resources of a second stakeholder, receiving a request regarding at least a part of a requirement that needs to be orchestrated with the second apparatus (128) from a first apparatus (120) that is configured to manage or orchestrate network resources of a first stakeholder, determining at the second apparatus (128) at least a part of the requirement that can be orchestrated with the second apparatus (128), and sending the response regarding the requirement, to the first apparatus (120).

15. The second apparatus (128) according to claim 14, **characterized in that** the request comprises a network intent, a network resource, a network service, a machine learning model, a composition of a machine learning model, or an information about a trust relationship between the first stakeholder and the second stakeholder.
